# EUROPÄISCHE PATENTSCHRIFT

(11) **EP 3 066 308 B1**
(45) Veröffentlichungstag und Bekanntmachung des Hinweises auf die Patenterteilung: **31.10.2018**
(21) Anmeldenummer: 14808588.9
(22) Anmeldetag: 03.12.2014
(51) Int. Cl.: F01D 25/28, F02C 7/20, F02C 7/22

(54) **HALTERUNG FÜR WENIGSTENS TEILWEISE RINGFÖRMIGE GASZUFÜHRLEITUNGEN EINER STATIONÄREN GASTURBINE**
ATTACHMENT FOR AT LEAST PARTIALLY ANNULAR GAS SUPPLY LINES OF A STATIONARY GAS TURBINE
SUPPORT POUR CONDUITES D'ARRIVÉE DE GAZ AU MOINS PARTIELLEMENT ANNULAIRES D'UNE TURBINE À GAZ STATIONNAIRE

(30) Priorität: 09.12.2013 EP 13196196
(43) Veröffentlichungstag der Anmeldung: 14.09.2016
(73) Patentinhaber: Siemens Aktiengesellschaft, 80333 München (DE)
(72) Erfinder: REUSCH, Ralf, 45481 Mülheim an der Ruhr (DE); FEI, Ruiqian, 45145 Essen (DE); HESSE, Werner, 45721 Haltern am See (DE); MURRENHOFF, Daniel, 44789 Bochum (DE)
(86) Internationale Anmeldenummer: PCT/EP2014/076386
(87) Internationale Veröffentlichungsnummer: WO 2015/086393

(56) Entgegenhaltungen:
- EP-A2- 1 719 888
- EP-A2- 1 736 651
- US-A- 5 271 218

## Beschreibung

Die vorliegende Erfindung betrifft eine stationäre Gasturbine mit mindestens einer wenigstens teilweise ringförmigen Gaszuführleitung, die durch eine Halterung abgestützt und gehaltert ist.

Bisher wurden die typischerweise ringförmigen Gaszuführleitungen von stationären Gasturbinen über geeignete Halterungen an dem Gehäuse der Gasturbine befestigt. Eine solche ist etwa in der EP 1736651A2 beschreiben. Aufgrund der Anforderungen an die Stabilität der Befestigung sind meist größere Halterungskomponenten an der Außenseite des Gehäuses der Gasturbine angebracht. Da jedoch die Bauweise von Gasturbine zunehmend komplexer wird, werden mitunter weitere wichtige Funktionsbauteile an der Außenseite des Gehäuses befestigt, bzw. ist das Gehäuse derart geformt, dass eine problemlose Halterung der Gaszuführleitung nicht mehr möglich ist. Hierbei sind insbesondere die Leitschaufelverstelleinrichtungen zu nennen, die bei neueren Gasturbinen einen Großteil der Außenfläche des Gehäuses belegen. Solche Funktionsbauteile verhindern in Folge eine herkömmliche Befestigung der Gaszuführleitung an der Außenseite des Gehäuses der Gasturbine.

Die bisherigen Halterungen erweisen sich jedoch nicht nur aufgrund des möglicherweise verminderten Platzes zur Anbringung an der Außenseite des Gehäuses der Gasturbine als nachteilig, sondern auch hinsichtlich der Stabilitätsanforderungen, die etwa bei Eintritt eines Erdbebens zu erfüllen sind. Die gesetzlichen Sicherheitsanforderungen verlangen nämlich, dass die Gaszuführleitungen auch im Falle eines Erdbebens sicher und ohne Schadensnahme an der Gasturbine gehaltert werden können. Insbesondere feste, mit der Außenseite des Gehäuses verbundene Halterungen übertragen aber mitunter im Falle eines Erdbebens mechanische Schwingungen derart effizient auf die Gaszuführleitung, dass diese beschädigt werden können bzw. diese sogar brechen können. In einem solchen signifikanten Schadensfall ist jedoch mit einer Brandentwicklung zu rechnen, die es zu vermeiden gilt.

Um die Gaszuführleitungen von der Außenseite des Gehäuses der Gasturbine zu entkoppeln schlägt die US 5,271,218 vor, eine Gaszuführleitung an zwei seitlichen, in einem Fundament eingebrachten Ständern an jeweils zwei Befestigungspunkten starr zu fixieren. Hierbei werden jedoch wiederum nicht die Auswirkungen mechanischer Schwingungen ausreichend berücksichtigt, so dass bei Auftreten solcher Schwingungen insbesondere an den Befestigungspunkten der Ständer mit mechanischen Schäden zu rechnen ist. Eine ausreichende Erdbebensicherheit kann damit in keinem Fall gewährleistet werden.

Aufgrund der oben dargestellten Nachteile aus dem Stand der Technik ergibt sich das technische Erfordernis, eine verbesserte Halterung für eine wenigstens teilweise ringförmige Gaszuführleitung vorzuschlagen, um diese sowohl effizient hinsichtlich der Platznutzung als auch sicher auf dem Gehäuse der stationären Gasturbine anzubringen. Weiter soll die Gaszuführleitung auch bei mechanischen Stößen und Schwingungseinwirkungen sicher betrieben werden können, so dass etwa auch eine verbesserte Erdbebensicherheit gewährleistet werden kann.

Die Anbringung der Halterung auf dem Gehäuse der Gasturbine betrifft hierbei, soweit Nichts anderes gesagt ist, in erster Linie die Außenseite der Gasturbine.

Die der Erfindung zugrundeliegende Aufgabe wird gelöst durch eine stationäre Gasturbine gemäß Anspruch 1.

Insbesondere werden die der Erfindung zugrundeliegenden Aufgaben gelöst durch eine stationäre Gasturbine mit mindestens einer wenigstens teilweise ringförmigen Gaszuführleitung, die durch eine Halterung abgestützt ist, wobei die Gasturbine im Inneren eine Hauptströmungsrichtung der Arbeitsfluide aufweist, und wobei die Halterung wenigstens eine gegen den Boden abgestützte, nicht an dem Gehäuse der Gasturbine angebrachte Bodenhalterung und eine auf dem Gehäuse der Gasturbine, auf der der Bodenhalterung gegenüberliegenden Seite angebrachte Stirnhalterung umfasst, und wobei sowohl die Bodenhalterung als auch die Stirnhalterung die mindestens eine Gaszuführleitung sowohl gegen eine Bewegung in die Hauptströmungsrichtung als auch senkrecht dazu, abstützen, wobei die Stirnhalterung auf dem Scheitelpunkt des Gehäuses bei regulärem Betrieb der Gasturbine vorgesehen ist und eine Federung aufweist, welche die Änderung der Ausdehnung des Gehäuses bei Betrieb der Gasturbine kompensiert.
An dieser Stelle sei darauf hingewiesen, dass die Hauptströmungsrichtung der Arbeitsfluide der mittleren Hauptströmungsrichtung der Arbeitsfluide entspricht und im Normalfall mit der Längsachse der Gasturbine übereinstimmt. Insbesondere entspricht die Hauptströmungsrichtung der Längserstreckungsachse des Gasturbinenläufers. Zudem soll darauf hingewiesen sein, dass eine Abstützung gegen eine Bewegung in die Hauptströmungsrichtung auch eine Abstützung in entgegen gesetzter Richtung umfassen soll.
Weiter sei darauf hingewiesen, dass eine wenigstens teilweise ringförmige Gaszuführleitung wenigstens einen Abschnitt aufweisen soll, welcher im Wesentlichen ringförmig ausgebildet ist. Eine Ringförmigkeit ist jedoch bereits auch schon dann gegeben, wenn eine solche durch einen Polygonenzug auch nur angenähert beschrieben werden kann. Insofern ist es also im erfindungsgemäßen Sinne nicht unbedingt erforderlich, dass die Gaszuführleitung eine methematisch exakte Ringform bzw. derartige Abschnitte beschreibt. Vielmehr ist es ausreichend, wenn die betreffende Gesamtabschnittsform durch einen Ringabschnitt ersetzt werden könnte.
Das erfindungsgemäße Halterungskonzept schlägt vor, die Halterung der wenigstens teilweise ringförmigen Gaszuführleitung auf wenigstens zwei Seiten des Gehäuses der Gasturbine zu gewährleisten, wobei die beiden Seiten sich im Wesentlichen gegenüberliegen. Aufgrund der geometrischen Anordnung von Bodenhalterung und Stirnhalterung kann zum einen gewährleistet werden, dass das Eigengewicht der Gaszuführleitung effizient abgestützt wird, wobei gleichzeitig auch eine Abstützung gegen eine Bewegung in Hauptströmungsrichtung effizient erreicht werden kann. Gleichzeitig können mechanische Einwirkungen, etwa in Form von Schwingungen, verbessert gedämpft werden, indem nämlich die Halterungsbereiche (Bodenhalterung und Stirnhalterung) sich im Wesentlichen gegenüberliegen und damit die eingekoppelte Schwingungsamplituden effektiv vermindern können. Weiterhin ist die Bodenhalterung gegenüber dem Boden abgestützt, so dass hierdurch nicht nur eine effiziente Kraftabstützung sondern auch eine vorteilhafte Schwingungsdämpfung erreicht werden kann. Da zudem die Abstützung nicht nur zum Boden hin erfolgt, also etwa senkrecht zur Hauptströmungsrichtung, sondern auch gegen eine Bewegung in die Hauptströmungsrichtung, bzw. in die entgegengesetzte Richtung der Hauptströmungsrichtung, kann eine gute Dämpfung von in das System von Gasturbine und Gaszuführleitung eingekoppelten Schwingungsamplituden erreicht werden.
Gemäß der Erfindung ist weiterhin vorgesehen, dass die Stirnhalterung eine Federung aufweist, welche insbesondere die Änderung der Ausdehnung des Gehäuses bei Betrieb der Gasturbine kompensieren kann. Ebenso können damit auch mechanische Stöße und Schwingungseinwirkungen abgedämpft werden, so dass etwa eine verbesserte Erdbebensicherheit gewährleistet werden kann. Die Federung kann hierbei zu einer besonders effizienten Schwingungsdämpfung in Bezug auf die Federcharakteristik der Gaszuführleitung eingestellt sein. Insbesondere lassen sich Federn von bestimmter Federhärte dazu vorsehen, wobei eine statische oder auch eine schwingungsmechanisch dynamische Rechnung sicherstellen kann, dass die Eigenschwingungen des Systems besonders effizient gedämpft werden.

Gemäß der Erfindung ist die Stirnhalterung auf dem Scheitelpunkt des Gehäuses bei regulärem Betrieb der Gasturbine vorgesehen. Ebenso ist es aber auch möglich, die Stirnhalterung in davon abweichender Position, also seitlich auf der Gehäusefläche in Richtung zur Bodenhalterung verschoben, anzubringen. Wesentlich ist jedoch hierbei, dass die Stirnhalterung in Querschnittsicht durch das Gehäuse der Gasturbine sich in Bezug auf dem Gehäuseoberteil (oberer Gehäuseabschnitt) angebracht ist, wohingegen die Bodenhalterung dem Gehäuseunterteil zugeordnet ist, also dem Boden zugewandt ist. Eine entsprechende Zuordnung erfordert hierbei jedoch nicht eine Anbringung an dem Gehäuse der Gasturbine. Ganz besonders bevorzugt erfolgt keine Anbringung der Bodenhalterung an dem Gehäuse der Gasturbine, um so eine mechanische Entkopplung zwischen Halterung und Gasturbine zu erreichen.

Entsprechend einer besonders bevorzugten Ausführungsform der Erfindung ist vorgesehen, dass die Bodenhalterung in einem Fundament der Gasturbine verankert ist. Dadurch kann zum einen, wie oben ausgeführt, eine Entkopplung zwischen Bodenhalterung und Gasturbine erreicht werden, andererseits kann auch eine effiziente Abstützung des Gewichts der Gaszuführleitung und der daran angeschlossenen Versorgungsleitungen gewährleistet werden. Ausführungsgemäß kann die Bodenhalterung einzelne Halterungsabschnitte aufweisen, welche die Gaszuführleitung in ihrer Umfangsrichtung (im Querschnitt in radialer Richtung, bzw. in Querschnitt senkrecht zur Strömungsrichtung in der Gaszuführleitung) wenigstens teilweise umgeben. Die Halterungsabschnitte können dabei so ausgeführt sein, dass einzelne Gaszuführleitungen individuell in der Halterung befestigt bzw. gelöst werden können.

Entsprechend einer weiteren besonders bevorzugten Ausführungsform der Erfindung ist vorgesehen, dass die Stirnhalterung einen ersten Verbindungsbereich aufweist, welcher mit dem Gehäuse der Gasturbine fest verbunden ist, sowie einen zweiten Verbindungsbereich, welcher gegen das Gehäuse der Gasturbine abgestützt, jedoch mit diesem nicht fest verbunden ist. Insofern kann die Stirnhalterung auch Änderungen der Geometrie des Gehäuses der Gasturbine, etwa bei Betrieb der Gasturbine bei sehr hohen Temperaturen, kompensieren. Insbesondere ergeben sich keine Spannungen zwischen dem Gehäuse der Gasturbine und der Stirnhalterung, die zu Spannungsschäden, wie etwa Spannungsrissen führen können. Zudem kann so mitunter eine effiziente Dämpfung bei Einkopplung von Schwingungen in das System von Gasturbine und Gaszuführleitung erreicht werden, indem nämlich eine Bewegung der Stirnhalterung gegen das Gehäuse der Gasturbine ebenfalls zu einer Dämpfung der Schwingungsdämpfung beitragen kann. Insbesondere ist der zweite Verbindungsbereich der Stirnhalterung gegen die Oberflächte des Gehäuses der Gasturbine verschiebbar.

Entsprechend einer ebenfalls besonders bevorzugten Ausführungsform der Erfindung ist vorgesehen, dass die Halterung weiterhin wenigstens zwei Seitenhalterungen aufweist, welche jeweils auf einander gegenüberliegenden Seiten der Gasturbine die Gaszuführleitung abstützen, insbesondere lediglich gegen eine Bewegung in die Hauptströmungsrichtung abstützen. Bevorzugt erreichen die Seitenhalterungen hierbei eine Abstützung der Gaszuführleitung auf einer Höhe der Gasturbine, welche im Wesentlichen mittig zwischen der Stirnhalterung und der Bodenhalterung angeordnet ist. Die Seitenhalterungen dienen hierbei zur weiterhin verbesserten Abstützung der Gaszuführleitung insbesondere gegen eine Bewegung in die Hauptströmungsrichtung und senkrecht dazu. Durch die Seitenhalterungen können so zum einen wiederum Gewichtskräfte der Gaszuführleitung bzw. der daran angeschlossenen Versorgungsleitungen abgestützt werden, zudem kann aber auch eine Schwingungsdämpfung der Gaszuführleitung, insbesondere bei Bewegung in oder entgegen zur Hauptströmungsrichtung besonders effizient erreicht werden.

Entsprechend einer besonders bevorzugten Ausführungsform ist hierbei vorgesehen, dass die wenigstens zwei Seitenhalterungen nicht mit dem Gehäuse der Gasturbine verbunden sind und insbesondere gegen den Boden abgestützt sind, und bevorzugt in einem Fundament der Gasturbine verankert sind. Damit können die beiden Seitenhalterungen vergleichbar zur Bodenhalterung, zum einen von dem Gehäuse der Gasturbine entkoppelt werden, und damit eine besonders effiziente Dämpfung im Schwingungsfall erreichen, zum anderen brauchen keine technischen Vorkehrungen getroffen zu werden, wenn sich die Gasturbine etwa infolge der Temperaturschwankungen bei Betrieb thermisch ausdehnt bzw. zusammen zieht. Die feste Verankerung der beiden Seitenhalterungen im Fundament der Gasturbine gewährleistet hierbei zudem auch die Erdbebensicherheit bei Betrieb.

Entsprechend einer alternativen Ausführungsform bzw. ergänzenden Ausführungsform kann vorgesehen sein, dass die wenigstens zwei Seitenhalterungen Gaszuführleitungen nicht voll umfänglich umschließen, sondern insbesondere lediglich an zwei einander gegenüberliegenden Bereichen, die nicht miteinander verbunden sind, die Gaszuführleitung abstützen. Die beiden einander gegenüberliegenden Bereiche dienen hierbei insbesondere zu einer Abstützung bei einer Bewegung in Richtung der Hauptströmungsrichtung bzw. in entgegengesetzter Richtung. Hierdurch kann etwa eine gezielte richtungsorientierte Schwingungsdämpfung erfolgen, ohne etwa das Risiko eingehen zu müssen, die Gaszuführleitung aufgrund einer voll umfänglich umschließenden Halterung etwa im Erdbebenfall zu schädigen.

Gemäß einer ebenfalls bevorzugten Ausführungsform der Erfindung ist vorgesehen, dass mindestens zwei, wenigstens teilweise ringförmige Gaszuführleitungen, insbesondere genau zwei oder vier Gaszuführleitungen vorgesehen sind. Durch das Vorsehen einer Mehrzahl an Gaszuführleitungen kann somit die Flexibilität der Versorgung der Gasturbine mit Brennstoff verbessert werden. Ebenfalls wird dadurch die Wartungsfähigkeit verbessert, da einzelne Gaszuführleitungen individuell gewartet, entnommen bzw. ausgetauscht werden können. Aufgrund der Erfahrung der Anmelderin hat es sich als vorteilhaft erwiesen, zwei oder vier Gaszuführleitungen vorzusehen, da diese mitunter Brennstoff bei unterschiedlichen Drücken, die zu unterschiedlichen Betriebszeitpunkten zur Verfügung gestellt werden können, vorhalten können.

Gemäß einer weiteren Ausführungsform der Erfindung ist vorgesehen, dass die wenigstens eine Gaszuführleitung und die Halterung in einem Bereich des Gehäuses der Gasturbine vorgesehen sind, welcher keine Leitschaufelverstelleinrichtung aufweist. Somit kann gewährleistet werden, dass die Gaszuführleitung bzw. Halterung und die Leitschaufelverstelleinrichtung sich nicht gegenseitig unerwünscht beeinflussen. Ein Vorsehen von Gaszuführleitung und Halterung betrifft hierbei das geometrische Anordnen von Gaszuführleitung und Halterung am Gehäuse der Gasturbine, bzw. oberhalb der Oberfläche des Gehäuses. Ausführungsgemäß ist es also denkbar, dass das Gehäuse der Gasturbine eine Leitschaufelverstelleinrichtung aufweist auf einer maximalen Höhe über dem Gehäuse angeordnet ist, bzw. aus diesem heraus ragt, die die wenigstens eine Gaszuführleitung jedoch noch über dieser maximalen Höhe von der Halterung fixiert ist.

Nachfolgend soll die Erfindung anhand einzelner Figuren im Detail näher erläutert werden. Hierbei ist anzuführen, dass die Figuren lediglich schematisch zu verstehen sind und keine Einschränkung hinsichtlich der Ausführbarkeit der Erfindung erlauben.

Weiterhin ist darauf hinzuweisen, dass alle Bauteile mit gleichen Bezugszeichen eine vergleichbare technische Wirkung aufweisen.

Ebenso soll darauf hingewiesen werden, dass die nachfolgend dargestellten technischen Merkmale in beliebiger Kombination miteinander beansprucht werden sollen, soweit die Kombination die der Erfindung zugrundeliegende Aufgabe zu lösen im Stande ist.

Hierbei zeigen:
- Figur 1: eine perspektivische Seitenansicht einer Ausführungsform der erfindungsgemäßen stationären Gasturbine 1 mit Halterung 10;
- Figur 2: eine perspektivische Detailansicht einer Ausführungsform der Stirnhalterung 12;
- Figur 3: eine Schnittansicht durch eine Ausführungsform der in Figur 1 gezeigten Stirnhalterung 12;

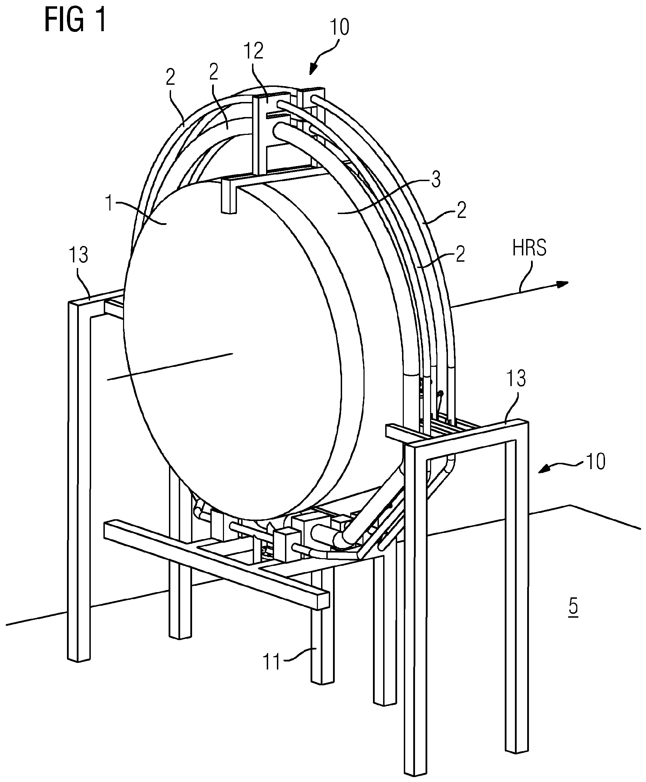

Figur 1 zeigt eine perspektivische Ansicht von der Seite auf eine Ausführungsform der erfindungsgemäßen stationären Gasturbine 1, welche eine Halterung 10 aufweist, die zur Halterung einer wenigstens teilweise ringförmigen Gaszuführleitung 2 vorgesehen ist. Die Gaszuführleitung 2 weist insgesamt vier Einzelleitungen auf, die im Wesentlichen ringförmig die äußere Fläche des Gehäuses 3 in Umfangsrichtung umlaufen bzw. umgeben.

Die einzelnen Leitungen der Gaszuführleitung 2 werden hierbei durch eine Bodenhalterung 11, eine Stirnhalterung 12 sowie zwei Seitenhalterungen 13 gehaltert bzw. abgestützt.

Die Stirnhalterung 12 ist bei regulärem Betrieb der Gasturbine 1, wie vorliegend dargestellt auf dem Scheitelpunkt der Außenfläche des Gehäuses 3 angebracht. Die Stirnhalterung 12 weist hierbei einzelne Halterungsabschnitte für die Einzelleitungen der Gaszuführleitung 2 auf, welche sowohl das Eigengewicht dieser Einzelleitungen senkrecht zu einer Hauptströmungsrichtung HSR der Gasturbine 1 abstützen, als auch senkrecht dazu also in Richtung der Hauptströmungsrichtung HSR bzw. in dazu entgegengesetzter Richtung. Die Hauptströmungsrichtung HSR betrifft hierbei diejenige Richtung der Arbeitsfluide in der Gasturbine 1, welche bei regulärem Betrieb, sich in Mittel über die gesamte Geometrie der Gasturbine 1 ergibt. Im Normalfall entspricht diese Hauptströmungsrichtung HSR der Längserstreckungsrichtung des Gasturbinenläufers (vorliegend nicht gezeigt), wie auch vorliegend zutreffend. Weiter weist die Stirnhalterung (12) eine Federung (15) (vorliegend nicht explizit gezeigt) auf, welche insbesondere die Änderung der Ausdehnung des Gehäuses (3) bei Betrieb der Gasturbine (1) kompensieren kann.

Die Bodenhalterung 11 ist auf einer der Stirnhalterung 12 gegenüberliegenden Seite der Gasturbine 1 angeordnet. Da die Bodenhalterung 11 mit dem Gehäuse der Gasturbine 1 mechanisch nicht direkt verbunden ist, ist sie besonders gut von dieser gegen Schwingungen entkoppelt. Eine Verbindung zwischen Bodenhalterung 11 und Gasturbine 1 erfolgt lediglich vermittelt über die Einzelleitungen der Gaszuführleitung 2. Die Bodenhalterung 11 vermag eine Abstützung des Eigengewichts der Einzelleitungen der Gaszuführleitung 2 zum Boden hin zu bewirken, sowie auch eine Abstützung in Bezug auf eine Bewegung in Richtung der Hauptströmungsrichtung HSR bzw. in entgegengesetzter Richtung. Um dennoch eine sichere Positionierung der Bodenhalterung 11 in Bezug auf die Gasturbine 1 gewährleisten zu können, ist die Bodenhalterung 11 in einem Fundament 5 verankert, in welchem die Gasturbine 1 ebenfalls verankert ist (vorliegend nicht gezeigt). Die Bodenhalterung 11 weist wie die Stirnhalterung 12 einzelne Halterungsabschnitte für die Einzelleitungen der Gaszuführleitung 2 auf, welche eine voll umfängliche Umfassung dieser Einzelleitungen vorsieht. Dadurch kann eine sichere Halterung sowie eine gute Abstützung in weitere Raumrichtungen erreicht werden.

Die wesentlichen Vorteile der Bodenhalterung 11 sind in der Aufnahme und Abstützung des Eigengewichts der Einzelleitungen der Gaszuführleitung 2 zu erkennen, sowie in der damit verbundenen Aufnahme in Abstützung von Anschlusslasten der Versorgungsleitungen (vorliegend nicht gezeigt). Gleichzeitig können Einzelleitungen der Gaszuführleitung 2 durch geeignete Halterungsabschnitte fixiert werden, so dass keine Bewegung senkrecht zur der Hauptströmungsrichtung HSR erfolgen kann. Zudem weist die Bodenhalterung 11 eine feste Verankerung im Fundament 5 auf, wodurch eine Fixierung in Bezug auf die ebenfalls in dem Fundament 5 fixierte Gasturbine 1 erreicht werden kann.

Die Halterung 10 weist zudem zwei Seitenhalterungen 13 auf, die wie die Bodenhalterung 11, in Ständerform ausgebildet sind. Die Seitenhalterungen 13 sind hierbei mit Halterungsabschnitten versehen, welche die Einzelleitungen der Gaszuführleitung 2 auf einer Höhe abstützen, welche etwa mittig zwischen der Anbringungshöhe der Stirnhalterung 12 und derjenigen der Bodenhalterung 11 vorgesehen ist. Hierbei können die Halterungsabschnitte, die einzelnen Leitungen der Gaszuführleitung 2 wiederum vollumfänglich umschließen, um so eine Bewegungseinschränkung der Einzelleitungen in zwei Raumrichtungen erreichen zu können. Es ist jedoch aber auch möglich, dass die Halterungsabschnitte lediglich eine Abstützung in zwei einander gegenüberliegenden Bereichen ermöglicht, die insbesondere nur eine Bewegung der Einzelleitungen der Gaszuführleitungen in die Hauptströmungsrichtung HSR und in die entgegengesetzte Richtung verhindern können, also gegen diese Bewegungen eine Abstützung erreichen.

Die beiden Seitenhalterungen 13 erlauben also eine zusätzlich Bereitstellung von Abstützungsbereichen, die insbesondere eine richtungsabhängige Führung und damit Gewährleistung von zusätzlicher Stabilität erreichen. Aufgrund der konkreten Ausführungsform der beiden Seitenhalterungen 13 kann die Wärmeausdehnung der Gaszuführleitung 2 bei Betrieb der Gasturbine erfolgen, ohne schädigende Bauteilspannungen hervorzurufen.

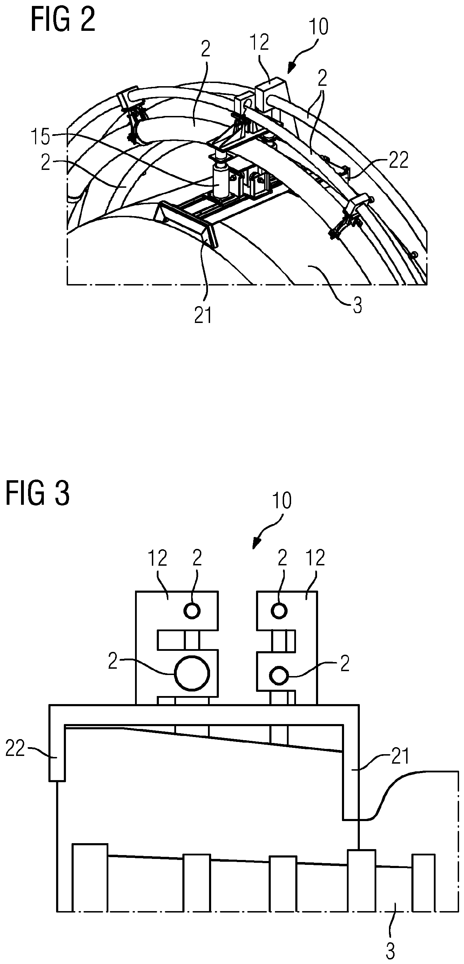

Figur 2 zeigt eine perspektivische Detailansicht einer weiteren Ausführungsform einer Stirnhalterung 12, in welcher deutlich zu erkennen ist, dass die Einzelleitungen der Gaszuführleitung 2 jeweils gesondert gehaltert werden. Die Stirnhalterung 12 weist zudem eine Federung 15 auf, welche insbesondere die Änderung der Ausdehnung des Gehäuses 3 bei Betrieb der Gasturbine 1 kompensieren kann. Zudem ist ein erster Verbindungsbereich 21 vorgesehen, welcher mit dem Gehäuse 3 der Gasturbine 1 fest verbunden ist, sowie ein zweiter Verbindungsbereich 22, welcher gegen das Gehäuse 3 der Gasturbine abgestützt ist, jedoch mit diesem nicht fest verbunden ist. Somit kann eine Spannungsschädigung bei Temperaturänderungen vermieden werden, da die Stirnhalterung 12 lediglich an einem Verbindungsbereich mit dem Gehäuse 3 der Gasturbine 1 fest verbunden ist, der andere aber eine Verschiebung der Bauteile gegeneinander erlaubt.

Der Vorteil der Stirnhalterung 12 liegt in erster Linie in einer Gewährleistung der sicheren Halterung auch bei Eintritt eines Erdbebens. Zudem ermöglicht die Stirnhalterung 12 die Abstützung der Gaszuführleitung 2 in Richtung des Bodens zur Aufnahme des Eigengewichts wie auch in Bewegungsrichtung senkrecht dazu, etwa in Hauptströmungsrichtung HSR. Ist die Stirnhalterung 12, wie gezeigt, modular aufgebaut, können einzelne Leitungen der Gaszuführleitung 2 leicht entnommen und ersetzt werden. Aufgrund der Ausführungen der Stirnhalterung mittels Federung 15 sowie durch lediglich fester Verbindung mit dem Gehäuse über den ersten Verbindungsbereich 21 kann ein Ausgleich der Wärmeausdehnung bei Betrieb der Gasturbine 1 effizient erreicht werden.

Ausführungsgemäß ist es auch möglich, die Stirnhalterung 12 als Schlitten (vorliegend nicht gezeigt) auszuführen, so dass ein Schlittenläufer, welcher die Einzelleitungen der Gaszuführleitung 2 haltert, und in einer Vorzugsrichtung auf einem solchen Schlitten, insbesondere in Richtung der Hauptströmungsrichtung HSR bzw. senkrecht dazu, verfahren werden kann.

Figur 3 zeigt eine Querschnittansicht durch eine Ausführungsform der Stirnhalterung 12, wie sie bspw. in Figur 1 gezeigt ist. Hierbei ist insbesondere deutlich zu sehen, dass die Stirnhalterung 12 auf einer Höhe angeordnet ist, welche über der maximalen Höhe einer Leitschaufelverstelleinrichtung angeordnet ist. Insofern ist gewährleistet, dass eine Halterung der Gaszuführleitung 2 auch dann noch sicher und vorteilhaft erreicht werden kann, wenn die Halterung 10 auf einem Abschnitt des Gehäuses der Gasturbine 1 vorgesehen ist, welcher auch eine Leitschaufelverstelleinrichtung aufweist. Weiter weist die Stirnhalterung (12) auch eine Federung (15) (vorliegend nicht explizit gezeigt) auf, welche insbesondere die Änderung der Ausdehnung des Gehäuses (3) bei Betrieb der Gasturbine (1) kompensieren kann.

Weitere Ausführungsformen ergeben sich aus den Unteransprüchen.

## Patentansprüche

1. Stationäre Gasturbine (1) mit mindestens einer wenigstens teilweise ringförmigen Gaszuführleitung (2), die durch eine Halterung (10) abgestützt ist, wobei die Gasturbine (1) im Inneren eine Hauptströmungsrichtung (HSR) der Arbeitsfluide aufweist, und wobei die Halterung (10) wenigstens eine gegen den Boden abgestützte, nicht an dem Gehäuse der Gasturbine (1) angebrachte Bodenhalterung (11) und eine auf dem Gehäuse (3) der Gasturbine (1), auf der der Bodenhalterung (11) gegenüber liegenden Seite angebrachte Stirnhalterung (12) umfasst, und wobei sowohl die Bodenhalterung (11) als auch die Stirnhalterung (12) die Gaszuführleitung (2) sowohl gegen eine Bewegung in die Hauptströmungsrichtung (HSR) als auch senkrecht dazu abstützen
**dadurch gekennzeichnet, dass** die Stirnhalterung (12) auf dem Scheitelpunkt des Gehäuses bei regulärem Betrieb der Gasturbine vorgesehen ist und eine Federung (15) aufweist, welche die Änderung der Ausdehnung des Gehäuses (3) bei Betrieb der Gasturbine (1) kompensiert.

2. Gasturbine nach Anspruch 1,
**dadurch gekennzeichnet, dass** die Bodenhalterung (11) in einem Fundament (5) der Gasturbine (1) verankert ist.

3. Gasturbine nach einem der vorhergehenden Ansprüche,
**dadurch gekennzeichnet, dass** die Stirnhalterung (12) einen ersten Verbindungsbereich (21) aufweist, welcher mit dem Gehäuse (3) der Gasturbine (1) fest verbunden ist, sowie einen zweiten Verbindungsbereich (22), welcher gegen das Gehäuse (3) der Gasturbine (1) abgestützt, jedoch mit diesem nicht fest verbunden ist.

4. Gasturbine nach einem der vorhergehenden Ansprüche,
**dadurch gekennzeichnet, dass** die Halterung (10) weiterhin wenigstens zwei Seitenhalterungen (13) aufweist, welche jeweils auf einander gegenüber liegenden Seiten der Gasturbine (1) die Gaszuführleitung (2) abstützen, insbesondere lediglich gegen eine Bewegung in die Hauptströmungsrichtung (HSR) abstützen.

5. Gasturbine nach Anspruch 4,
**dadurch gekennzeichnet, dass** die wenigstens zwei Seitenhalterungen (13) nicht mit dem Gehäuse der Gasturbine (1) verbunden sind und insbesondere gegen den Boden abgestützt sind, und bevorzugt in einem Fundament (5) der Gasturbine (1) verankert sind.

6. Gasturbine nach Anspruch 4 oder 5,
**dadurch gekennzeichnet, dass** die wenigstens zwei Seitenhalterungen (13) die Gaszuführleitung (2) nicht vollumfänglich umschließen, sondern insbesondere lediglich an zwei einander gegenüber liegenden Bereichen, die nicht miteinander verbunden sind, die Gaszuführleitung (2) abstützen.

7. Gasturbine nach einem der vorhergehenden Ansprüche,
**dadurch gekennzeichnet, dass** mindestens zwei wenigstens teilweise ringförmige Gaszuführleitungen (2), insbesondere genau zwei oder vier Gaszuführleitungen (2) vorgesehen sind.

8. Gasturbine nach einem der vorhergehenden Ansprüche,
**dadurch gekennzeichnet, dass** die wenigstens eine Gaszuführleitung (2) und die Halterung (10) in einem Bereich des Gehäuses (3) der Gasturbine (1) vorgesehen sind, welcher keine Leitschaufelverstelleinrichtung aufweist.

## Claims

1. Stationary gas turbine (1) having at least one at least partially annular gas supply line (2) which is supported by a retainer (10), wherein the gas turbine (1) in the interior has a main flow direction (HSR) of the operating fluids, and wherein the retainer (10) comprises at least one floor retainer (11) which is supported in relation to the floor and is not attached to the housing of the gas turbine (1), and an end face retainer (12) which is attached to the housing (3) of the gas turbine (1) on that side that is opposite the floor retainer (11), and wherein both the floor retainer (11) as well as the end face retainer (12) support the gas supply line (2) in relation to both movement in the main flow direction (HSR) as well as perpendicular to the latter,
**characterized in that**
the end face retainer (12) in the regular operation of the gas turbine is provided on the apex of the housing and has
a spring system (15) which compensates the variation in the expansion of the housing (3) during operation of the gas turbine (1).

2. Gas turbine according to Claim 1,
**characterized in that**
the floor retainer (11) is anchored in a foundation (5) of the gas turbine (1).

3. Gas turbine according to one of the preceding claims,
**characterized in that**
the end face retainer (12) has a first connection region (21) which is fixedly connected to the housing (3) of the gas turbine (1), as well as a second connection region (22) which is supported in relation to the housing (3) of the gas turbine (1) but is not fixedly connected thereto.

4. Gas turbine according to one of the preceding claims,
**characterized in that**
the retainer (10) furthermore has at least two lateral retainers (13) which each support the gas supply line (2) on mutually opposite sides of the gas turbine (1), in particular providing support only in relation to movement in the main flow direction (HSR).

5. Gas turbine according to Claim 4,
**characterized in that**
the at least two lateral retainers (13) are not connected to the housing of the gas turbine (1) and are in particular supported in relation to the floor and are preferably anchored in a foundation (5) of the gas turbine (1).

6. Gas turbine according to Claim 4 or 5,
**characterized in that**
the at least two lateral retainers (13) do not completely encompass the gas supply line (2) but in particular support the gas supply line (2) in only two mutually opposite regions which are not interconnected.

7. Gas turbine according to one of the preceding claims,
**characterized in that**
at least two at least partially annular gas lines (2), in particular precisely two or four gas supply lines (2), are provided.

8. Gas turbine according to one of the preceding claims,
**characterized in that**
the at least one gas supply line (2) and the retainer (10) are provided in a region of the housing (3) of the gas turbine (1) that has no guide vane adjustment installation.

## Revendications

1. Turbine (1) à gaz industrielle comprenant au moins un conduit (2) d'apport de gaz au moins en partie annulaire, qui est appuyée par une fixation (10), la turbine (1) à gaz ayant à l'intérieur une direction (HSR) d'écoulement principale du fluide de travail et dans laquelle la fixation (10) comprend au moins une fixation (11) de fond appuyée sur le fond et non mise sur l'enveloppe de la turbine (1) à gaz et une fixation (12) frontale, mise sur l'enveloppe (3) de la turbine (1) à gaz du côté opposé à la fixation (11) de fond et dans lequel tant la fixation (11) de fond qu'également la fixation (12) frontale appuient le conduit (2) d'apport de gaz en empêchant un déplacement tant dans la direction (HSR) d'écoulement principale que perpendiculairement à celle-ci
**caractérisée en ce que**
la fixation (12) frontale est prévue au point culminant de l'enveloppe en fonctionnement régulier de la turbine à gaz et a une suspension (15) qui compense la variation de la dilatation de l'enveloppe (3) lorsque la turbine (1) à gaz fonctionne.

2. Turbine à gaz suivant la revendication 1,
**caractérisée en ce que**
la fixation (11) de fond est ancrée dans une fondation (5) de la turbine (1) à gaz.

3. Turbine à gaz suivant l'une des revendications précédentes,
**caractérisée en ce que**
la fixation (12) frontale a une première partie (21) de fixation, qui est reliée rigidement à l'enveloppe (3) de la turbine (1) à gaz, ainsi qu'une deuxième partie (22) de fixation, qui s'appuie sur l'enveloppe (3) de la turbine (1) à gaz, mais n'est pas reliée rigidement à celle-ci.

4. Turbine à gaz suivant l'une des revendications précédentes,
**caractérisée en ce que**
la fixation (10) a, en outre, au moins deux fixations (13) latérales, qui appuient chacune le conduit (2) d'apport de gaz sur des côtés opposés l'un à l'autre de la turbine (1) à gaz, en empêchant notamment seulement un déplacement dans la direction (HSR) d'écoulement principale.

5. Turbine à gaz suivant la revendication 4,
**caractérisée en ce que**
les au moins deux fixations (13) latérales ne sont pas reliées à l'enveloppe de la turbine (1) à gaz et sont appuyées notamment sur le fond et, de préférence, sont ancrées dans une fondation de la turbine (1) à gaz.

6. Turbine à gaz suivant la revendication 4 ou 5,
**caractérisée en ce que**
les au moins deux fixations (13) latérales n'entourent pas sur tout le pourtour le conduit (2) d'apport de gaz, mais appuient le conduit (2) d'apport de gaz seulement sur deux parties opposées l'une à l'autre, qui ne sont pas reliées entre elles.

7. Turbine à gaz suivant l'une des revendications précédentes,
**caractérisée en ce qu'**
il est prévu au moins deux conduits (2) d'apport de gaz, au moins en partie annulaires, notamment exactement deux ou quatre conduits (2) d'apport de gaz.

8. Turbine à gaz suivant l'une des revendications précédentes,
**caractérisée en ce que** le au moins un conduit (2) d'apport de gaz et la fixation (10) sont prévus dans une partie de l'enveloppe (3) de la turbine (1) à gaz, qui n'a pas de dispositif de réglage d'aube directrice.
